# EUROPÄISCHE PATENTSCHRIFT

(11) **EP 1 037 420 B1**
(45) Veröffentlichungstag und Bekanntmachung des Hinweises auf die Patenterteilung: **05.09.2007**
(21) Anmeldenummer: 00104815.6
(22) Anmeldetag: 06.03.2000
(51) Int. Cl.: H04J 3/06, H04L 7/04

(54) **Verfahren zur Rahmensynchronisation in einem Zeitmultiplexsystem**
Rahmensynchronisierungsverfaren in einem Zeitmultiplexsystem
Procédé de synchronisation de trame dans un système à multiplexage temporel

(30) Priorität: 16.03.1999 DE 19911715
(43) Veröffentlichungstag der Anmeldung: 20.09.2000
(73) Patentinhaber: SIEMENS AKTIENGESELLSCHAFT, 80333 München (DE)
(72) Erfinder: Wedi, Christoph, 46395 Bocholt (DE); Lewandowski, Kai, 46395 Bocholt (DE)

(56) Entgegenhaltungen:
- EP-A- 0 833 477
- DE-A1- 19 818 514

## Beschreibung

Die Erfindung bezieht sich auf ein Verfahren zur Rahmensynchronisation in einem Zeitmultiplexsystem, bei welchem empfangsseitig die Zeitlage einer, in einem Zeitschlitz empfangenen digitalen Zeichenfolge mittels eines aus einer Anzahl n aufeinanderfolgenden Zeichen bestehenden Synchronisationswortes festgelegt wird, wobei ein Fenster vorgegebener Länge um eine Position ermittelt wird, in welcher der Rahmenstruktur des Systems entsprechend das Synchronisationswort zu erwarten ist, und innerhalb des Fensters eine Teilfolge der Zeichenfolge mit einem abgespeicherten Musterwort verglichen wird, bis ein Vergleich als positiv bewertet wird, und bei positiver Bewertung die Position des Synchronisationswortes für die Rahmensynchronisation verwendet, bei negativer Bewertung des Rahmens als unsynchronisiert verworfen wird.

Ebenso bezieht sich die Erfindung auf eine Vorrichtung zur Rahmensynchronisation in einer Empfangseinrichtung eines Zeitmultiplexsystems, bei welcher eine empfangene und mit dem Empfängertakt synchronisierte Zeichenfolge einer Synchronisationswort-Erkennungseinheit zugeführt ist, welche ein Schieberegister, und zum Vergleich einer aus einer Anzahl n aufeinanderfolgenden Zeichen bestehenden Teilfolge der Zeichenfolge mit einem abgespeicherten Musterwort ein Vergleichsregister aufweist.

In einem Nachrichtensystem, wie z.B. einem Mobilfunksystem, in welchem ein gemeinsamer Übertragungsweg von einer Anzahl von Teilnehmern benutzt wird, kann mittels eines Multiplexverfahrens der Übertragungsweg in mehrere Übertragungskanäle aufgeteilt werden, die jeweils von einem Teilnehmer genutzt werden. Bei dem Zeitmultiplexverfahren (TDMA, Time Division Multiple Access) wird der Übertragungsweg in Zeitschlitze aufgeteilt, die periodisch wiederkehrende Zeitfenster darstellen, innerhalb deren dem Teilnehmer jeweils der gesamte Übertragungsweg zur Verfügung steht. Die Zeitpunkte der Zeitschlitze verschiedener Teilnehmer sind so gegeneinander verschoben, daß einzelne darin übertragene Impulsbündel, auch Bursts genannt, sich möglichst lückenlos, jedoch nicht überlappend innerhalb eines sogenannten Pulsrahmens aneinanderreihen. Hierzu muß jeder Teilnehmer für sein Impulsbündel die Zeitsynchronisation in Bezug auf den Rahmen kontrollieren und gegebenenfalls korrigieren. Zeitschlitze, die nicht synchronisiert sind, müssen verworfen werden; die zugehörige Information muß wiederholt gesendet werden oder geht verloren.

Auch wenn in einem früheren Rahmen eine korrekte Synchronisation gegeben war, wird später eine Überprüfung der Synchronisation durchgeführt, da ein zeitliches Auseinanderdriften von Sender und Empfänger stets möglich ist. Eine solche Synchronisationsdrift kann beispielsweise wegen geänderter Laufzeiten auf der Funkstrecke nach einer Bewegung relativ zur Gegenstelle der Fall sein, infolge voneinander abweichender Schwingungsdauern der Zeitgeber, wodurch sich etwa über eine Übertragungsunterbrechung von mehreren Rahmendauern hinweg merkliche Phasendifferenzen akkumulieren können, oder nach einer Synchronisationskorrektur der Gegenstelle, wenn diese etwa ihrerseits einer anderen Endstelle des Mehrbenutzersystems nachsynchronisiert hat. Bei der Suche einer synchronen Basisstation, beispielsweise zur Einleitung eines sogenannten Handover in einem Mehrzellensystem, können naturgemäß ebenfalls große Synchronisationsdifferenzen auftreten.

Um die Überprüfung der Synchronisation zu ermöglichen, enthält jedes Impulsbündel neben den Nutzdaten zusätzlich ein Synchronisationsfeld fester Länge, welches üblicherweise am Beginn des Impulsbündels steht. Das Synchronisationsfeld enthält eine Präambel, ein Synchronisationswort sowie gegebenenfalls weitere Informationen. Die Präambel enthält eine festgelegte Codefolge, meist ein Wechsel von 0- und 1-Bits, und ermöglicht die schnelle Erkennung des Trägertaktes; das Synchronisationswort ist ebenfalls fest vorgegeben und dient der genauen Kennzeichnung der zeitlichen Lage der Zeichenfolge.

Das TDMA-Verfahren ist beispielsweise in dem Schnurlos-Telekommunikationssystem nach dem DECT-Standard (Digital Enhanced Cordless Telecommunication) vorgesehen. Jede Trägerfrequenz des DECT-Systems ist in je 24 Zeitschlitze (sogenannte "full slots") von 416 µs Dauer unterteilt; ein Rahmen umfaßt 10 ms. In dem Zeitfenster eines Zeitschlitzes werden in 367 µs 424 Datenbits übertragen, von denen die ersten 32 Bits auf das als S-Feld bezeichnete Synchronisationsfeld entfallen, das wiederum aus einer 16-Bit-Präambel und einem 16-Bit-Synchronisationswort besteht. Für eine eingehendere Darstellung des DECT-Systems, welches außerdem ein FDMA (Frequency Division Multiple Access)-Verfahren darstellt, und der Synchronisationsstruktur sei auf "Struktur des DECT-Standards" von Ulrich Pilger, Nachrichtentechnik, Elektronik, Berlin 42 (1992) 1, sowie auf den Standard ETS 300 175-2, Abschnitt 4.2, des Europäischen Normeninstituts für Telekommunikation (ETSI) verwiesen.

Bei bekannten Endstellen-Geräten wird eine Rahmensynchronisation akzeptiert, wenn der Vergleich des empfangenen Synchronisationswortes mit einem abgespeicherten Synchronisationswort übereinstimmt. Hierbei wird eine bestimmte maximale Fehlerzahl zugelassen, z.B. 2 Bits; dies führt zu einer Fehlertoleranz gegenüber Übertragungsfehlern. Weiters wird, um eine mögliche Synchronisationsdrift abzufangen, zusätzlich ein Fenster definiert, in dem dieser Vergleich durchgeführt wird. Das Synchronisationswort wird somit nicht nur an der zeitlichen Position gesucht, die gemäß der Rahmenstruktur erwartet wird, also etwa im Beispiel des DECT nach einem exakten Vielfachen von 10 ms seit dem letzten Synchronisationsvorgang, sondern in einem durch das Fenster definierten Bereich, z.B. je 3 Bits um die erwartete Position. Wird in diesem Synchronisationsbereich das Synchronisationswort gefunden, so wird auf dessen Position nachsynchronisiert.

Es ist weiters bekannt, für die Korrektur der Rahmensynchronisation mehr als eine Synchronisationsworterkennung heranzuziehen. So können beispielsweise mehrere frühere Synchronisationspositionen akkumuliert werden und aus diesen nach einer vorgegebenen Vorschrift die nächste Rahmensynchronisation ermittelt werden.

Kann dagegen über mehrere Rahmen hinweg keine Nachsynchronisation erfolgen, wird die Synchronisation zur Gänze verworfen und von neuem auf die Rahmenstruktur aufsynchronisiert, eventuell sogar mit einer neuerlichen Kanalbelegung, was naturgemäß mit erheblichen Störungen der Nachrichtenübertragung bis hin zum Verbindungsverlust verbunden sein kann. Die Wahl der Fenstergröße und der Fehlergrenze dient als Kompromiß zwischen exakter Synchronisation mit möglicherweise häufigen Rahmenverlusten einerseits und geringen Rahmenverlusten bei der Gefahr einer Fehlsynchronisation andererseits als Instrument der Datensicherheit.

In bekannten Geräten wird zunächst eine Überabtastung der Präambel vorgenommen, um eine optimale Abtastphase des Taktes für das nachfolgende Synchronisationswort zu gewinnen. Daraufhin wird mit dem phasenoptimierten Takt das nachfolgende Synchronisationswort abgetastet, um die erforderliche Synchronizität herzustellen.

Die Überabtastung der Präambel als Bestandteil eines digitalen Datenstroms mit einem vorgegebenen Muster wird gemäß der EP 0 833 477 A2 für das Bestimmen einer Abtastphase verwendet. Die Präambel bzw. der das Bitmuster enthaltende Datenstrom wird für jeden Digitalwert n-fach überabgetastet. Die so entstehende Subdaten-Bitfolge wird anschließend in einer Registerbank gespeichert, wo die einzelnen Subdatenbits in Bitgruppen von n-Bitstellen unterteilt werden. Anschließend werden Binärwerte mindestens einer übereinstimmenden Bitstel le innerhalb mindestens zweier Bitgruppen auf Übereinstimmung überprüft. In Abhängigkeit von diesem Überprüfungsergebnis wird letztendlich die Abtastphase festgelegt.

Eine Aufgabe der Erfindung liegt darin, die Ermittlung des optimalen Abtastzeitpunktes und die Erkennung des Synchronisationswortes dahingehend zu verbessern, daß Bit-Fehler- und Burstfehlerrate, insbesondere an der Empfindlichkeitsgrenze, verringert werden.

Diese Aufgabe wird mit einem Verfahren der eingangs genannten Art gelöst, bei welchem erfindungsgemäß die empfangene digitale Zeichenfolge mit einem Faktor k überabgetastet wird, k durch die Überabtastung entstandene, je die Anzahl n aufweisende Sub-Teilfolgen vorübergehend abgespeichert und aufeinanderfolgend mit dem Musterwort verglichen werden, bei jeder positiven bzw. negativen Bewertung des Vergleiches ein positiver bzw. negativer Eintrag des entsprechenden Zeitpunktes erfolgt, und aus der Lage zumindest zweier Einträge die Abtastphase für die Synchronisation ermittelt wird. Mit Hilfe der Erfindung läßt sich eine deutliche Verbesserung der Bitfehlerrate sowie auch der Burstfehlerrate erreichen, insbesondere an der Empfindlichkeitsgrenze des Endgerätes von Mobil- und Festteil (-Basisstation).

Bei einer vorteilhaften praktischen Ausführungsform wird als Abtastphase die Mitte zwischen dem ersten und dem letzen positiven Eintrag gewählt, wobei dies mit geringem Aufwand durchführbar ist.

Alternativ kann als Abtastphase die Mitte zwischen dem ersten positiven und dem ersten negativen Eintrag gewählt werden, oder es kann bei mehreren positiven Einträgen die Mitte zwischen aufeinanderfolgenden positiven Einträgen als Abtastphase gewählt werden. Alle diese Ausführungen sind zweckmäßig und können je nach Durchführungskonzept gewählt werden.

Zweckmäßig ist es weiters, wenn zur Beruhigung der Daten um die Abtastphase mehrere Abtastungen durch Majoritätsbildung ausgewertet werden, da sich hierdurch die Fehlerrate weiter verringern läßt.

Das Verfahren nach der Erfindung läßt sich mit besonderem Vorteil bei einem DECT-System verwenden. Eine praxisgerechte Überabtastung kann dabei mit einem Faktor k = 9 erfolgen.

Die genannte Aufgabe läßt sich in gleicher Weise mit einer Vorrichtung der zu Beginn angeführten Art erreichen, bei welcher erfindungsgemäß das Schieberegister aus einer Anzahl n von k-fachen Sub-Schieberegistern besteht, welchen die mit einem Faktor K überabgetastete Zeichenfolge zugeführt ist, ein k-faches Ereignis-Schieberegister zur Aufnahme positiver bzw. negativer Bewertungseinträge vorgesehen ist, und zur Ermittlung der Abtastphase für den folgenden Zeitschlitz aus der Lage zumindest zweier Einträge des Ereignis-Schieberegisters diesem eine Synchronisationermittlung nachgeordnet ist.

Die mit dieser Vorrichtung erzielbaren Vorteile entsprechen den in Zusammenhang mit dem Verfahren genannten, und sinngemäß gleiches gilt für die weiteren zweckmäßigen Ausbildungen der Vorrichtung nach den Ansprüchen 10 bis 13. Eine solche Vorrichtung wird zweckmäßigerweise in DECT-Endstellen vorgesehen, sowohl in den Fest- als auch in den Mobilteilen.

Die Erfindung samt weiterer Vorzüge wird im folgenden an einem Ausführungsbeispiel, welches die Rahmensynchronisation in einer Endstelle eines DECT-Systems darstellt, unter Zuhilfenahme der beigefügten Figuren näher erläutert. Die Figuren zeigen
- Fig. 1 ein prinzipielles Blockschaltbild eines EndstellenGerätes eines Zeitmultiplex-Systems nach dem Stand der Technik,
- Fig. 2 ein Blockschaltbild eines Endstellengerätes nach der Erfindung, und
- Fig. 3 anhand eines Blockschaltbildes die wesentlichen Komponenten der Synchronisationswort-Erkennungseinheit aus Fig. 2.

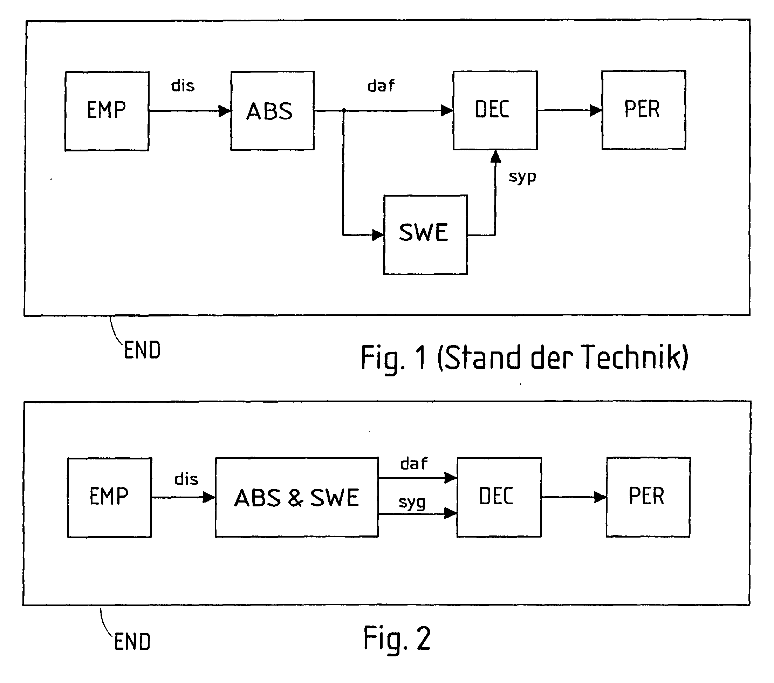

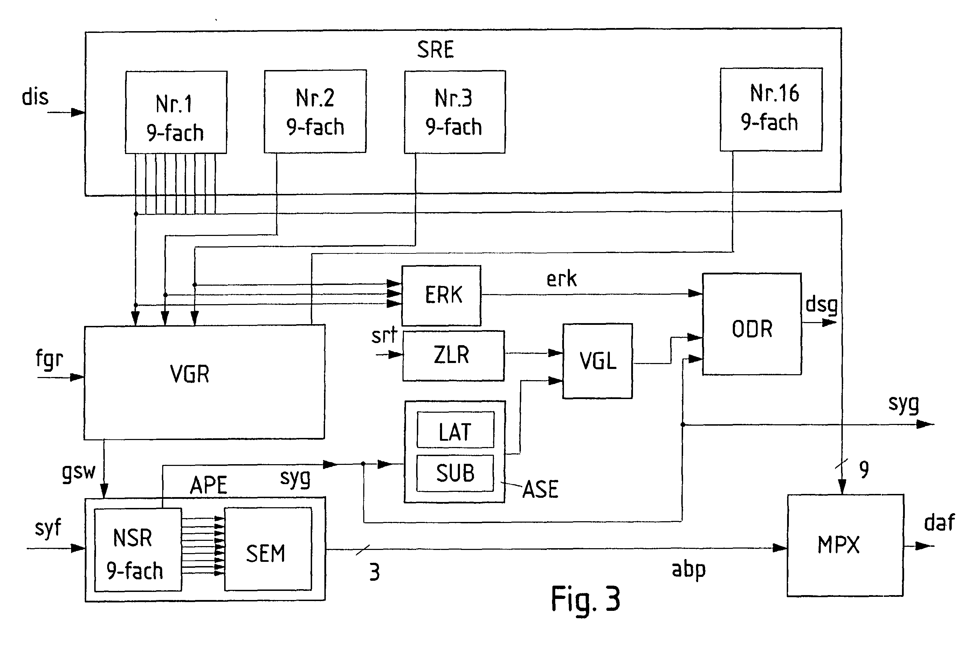

Es sei an dieser Stelle nochmals angemerkt, daß die Erfindung nicht auf DECT-Systeme, und insbesondere nicht auf die Einzelheiten der in den Fig. 2 und 3 gezeigten Vorrichtungen beschränkt ist, sondern grundsätzlich in jedem Zeitmultiplexsystem anwendbar ist, welches zur Synchronisation eine Präambel mit Synchronisationswort verwendet.

Die Rahmensynchronisation wird in einer Synchronisationswort-Erkennungseinheit SWE durchgeführt. Fig. 1 zeigt stark vereinfacht den Zusammenhang dieser Einheit mit den anderen Komponenten einer Endstelle END nach dem Stand der Technik. Zum Empfang der über den Übertragungsweg, in dem Beispiel die Schnurlos-Schnittstelle des DECT, gesendeten Signale dient der Empfangsteil EMP, der einen digitalen Zeichenstrom dis liefert. In einer Abtastsynchronisier-Einheit ABS wird der Zeichenstrom dis mit dem Takt der Endstation synchronisiert (die Takterzeugung ist nicht gezeigt). Ein Verfahren hierfür ist beispielsweise in der EP 0 667 073 B1 beschrieben. Die sich aus der Abtastsynchronisation ergebende taktsynchronisierte Zeichenfolge daf wird nur einer Decodier- und Steuereinheit DEC zugeführt, die daraus die Nutz- und Steuerinformation bestimmt und in Signale für die Peripherie PER, z.B. analoge Signale für eine Lautsprechereinheit, umsetzt. Die in Fig. 1 gezeigten Komponenten können in ihrer Gesamtheit oder zum Teil beispielsweise als integrierte ASIC-Bausteine oder mittels Software, etwa in einem digitalen Signalprozessor, ausgebildet sein.

Für die Auswertung der digitalen Zeichenfolge daf benötigt die Decodier-Einheit DEC die Information, an welcher Stelle der Zeichenfolge die Nutzinformation beginnt. Diese Information bezieht die Decodiereinheit in Form eines Synchronisationspulses syp von der Synchronisationswort-Erkennungseinheit SWE, welche die Rahmensynchronisation für die Zeichenfolge daf durchführt.

Wie sich aus Fig. 2 und im Detail weiter unten in Zusammenhang mit Fig. 3 ergibt, sind bei der Erfindung die Abtastsynchronisier-Einheit ABS und die Synchronisationswort-Erkennungseinheit SWE zusammengefaßt, und der Aufbau dieser Einheit ABS & SWE ist aus Fig. 3 ersichtlich.

Nun auf Fig. 3 kommend sei erläutert, daß die Zeichenfolge dis in ein 16 * 9-fach Schieberegister SRE getaktet wird, dessen Länge durch die Überabtastung und die benötigten Empfangsbits bestimmt ist. Bei dem hier betrachteten DECT-System beträgt daher die Registerlänge 16 Bit, multipliziert mit dem Faktor der Überabtastung, der in diesem Beispiel 9 beträgt, da der Systemtakt von 10,368 MHz dem 9-fachen des Bittaktes von 1,152 MHz entspricht. Dabei kann die Registerlänge größer sein, falls auch noch Bits der Präambel in der Synchronisationswort-Erkennung Berücksichtigung finden sollen.

Die in dem Schieberegister zwischengespeicherte Folge wird nun in einem Vergleichsregister VRG mit einem festen Muster-Synchronisationswort, d.h. dem erwarteten Synchronisationswort verglichen, wobei eine Fehlertoleranz, üblicherweise ein bis zwei Fehler, zugelassen werden kann, welche z.B. als Fehlergrenzenvorgabe fgr zugeführt ist. Wird ein Synchronisationswort unter Berücksichtigung des erlaubten Fehlers erkannt, so führt dies dazu, daß die jeweilige Abtastung als "gültiges Synchronisationswort empfangen" - Signal gsw - als positiver Eintrag, z.B. eine "1", in ein 9-fach Ereignis-Schieberegister NSR einer Anpassungseinheit APE eingetragen wird. Sinngemäß gleiches gilt für ein Nichterkennen; in diesem Fall kann ein negativer Eintrag, z. B. eine "0" in das Register NSR eingetragen werden oder einfach ein "Nichteintrag" vorliegen.

Der Anpassungseinheit APE ist auch das eingestellte Synchronisationsfenster, d.h. ein Fensterbereich um die erwartete Position des Synchronisationswortes zugeführt - Signal syf. Liegt das Synchronisationswort innerhalb des Fensters wird eine Meldung "Synchronisation gefunden" - Signal syg - an eine Abschalteinheit ASE abgegeben. Der Inhalt des Ereignisregisters NSR wird weiters einer Synchronisationsermittlung SEM für die Abtastphase zugeführt, und deren Ausgang abp gelangt zu einem Eingang eines Multiplexers MPX, an dem auch die Ausgänge des Schieberegisters SRE liegen, so daß der Multiplexer MPX entsprechend der Vorgabe durch die Ermittlung SEM ein optimal abgetastetes Bit aus dem Schieberegister SRE ausliest.

Nachstehend wird die Funktion der Synchronisationseinheit noch ausführlicher erläutert.

Da das Synchronisationswort theoretisch für ein ganzes Bit, d.h. mit der Anzahl der Überabtastungen, gesehen wird, kann die optimale Abtastphase nun auf verschiedene Möglichkeiten ermittelt werden. So hat es sich in der Praxis als zweckmäßig erwiesen, den Zeitpunkt der ersten Synchronisation festzuhalten, sodann mit der Anzahl der Überabtastungen - in diesem Beispiel neun - die letzte Synchronisation innerhalb der maximal neun Überabtastungen zu suchen und letztlich die Mitte der beiden Ergebnisse als Abtastphase für den restlichen Slot zu verwenden. Dies erfolgt in der bereits genannten Anpassungseinheit APE, in welcher in das 9-fach Schieberegister NSR bei jedem Auftreten eines gültigen Synchronisationswortes eine "1" sonst jedoch eine "0" eingeschrieben wird. Aus zwei "1", die mit dem Abtasttakt weitergeschoben werden, wird in der Ermittlung SEM die Mitte festgestellt. Dabei kann es durchaus vorkommen, daß Abtastungen zwischen der ersten und letzten Abtastphase kein gültiges Synchronisationswort enthalten. Mit Hilfe des Ausganges abp, d.h. mit Hilfe der ermittelten Abtastphase wird durch den Multiplexer MPX der passende digitale Ausgangswert aus dem Schieberegister SRE gelesen.

Eine andere, in der Praxis sehr brauchbare Möglichkeit zur Bestimmung der Abtastphase besteht darin, die Mitte zwischen dem ersten Erkennen und dem ersten Nichterkennen des Synchronisationswortes zu bestimmen.

Unter bestimmten Bedingungen kann bei der Auswahl der Abtastphase keine eindeutige Entscheidung hinsichtlich der optimalen Abtastphase getroffen werden. Sind beispielsweise vier Synchronisationen erkannt worden, so kann sowohl die zweite als auch die dritte der erkannten Synchronisationen das Optimum darstellen. In einem solchen Fall ist es sinnvoll, die halbe Überabtastung nach der zweiten erkannten Synchronisation zu bestimmen, da hierdurch die Auflösung der Abtastzeitpunktermittlung quasi verdoppelt wird. Demnach beträgt die Auflösung 1/18, hier 48 ns, obwohl nur eine 9-fache Überabtastung vorliegt. Technisch kann z. B. der Datenstrom um eine halbe Abtast-Takteinheit durch Umschalten der Taktflanken, z. B. von positiv auf negativ, versetzt werden.

Eine Stabilitätsverbesserung - Datenberuhigung um die Abtastphase - kann man noch durch eine sogenannte Glitchunterdrückung, hier ein Unterdrücken von kurzen, nur einen Abtasttakt betreffenden Änderungen des Zeichenfolgen-Eingangs da, erreichen. Eine weitere Möglichkeit zur Datenberuhigung besteht darin, mehrere Abtastungen um die gefundene Abtastphase im Sinne einer Majoritätsbildung auszuwerten. Dazu werden beispielsweise Abtastungen vor und nach der optimalen Abtastphase mit einbezogen und es wird z.B. "100" mit "0" und "110" mit "1" bewertet.

In Fig. 3 ist der Vollständigkeit halber noch die dem Stand der Technik angehörende Data Slicer Gating-Abschaltung für das "Einfrieren" der Komparatorschwelle im HF-Teil gezeigt. Dazu wird das syg-Signal (Synchronisation gefunden) einer Abschalteinheit ASE zugeführt, die ein Latch LAT und einen Subtrahierer SUB aufweist, der sechzehn Bits subtrahiert, wenn, wie hier das Synchronisationswort sechzehn Bits lang ist, so daß das Abschalten genau nach der Präambel erfolgen kann. Das Latch LAT wird von einem Zähler ZLR gesteuert, dem ein Startsignal srt zu einem fixen Zeitpunkt des Slotrasters zugeführt wird. Die Ausgänge des Zählers ZLR und der Abschalteinheit ASE gelangen zu einem Vergleicher VGL und dessen Ausgang ist einer ODER-Schaltung ODR zugeführt, welche das Abschaltsignal dsg liefert. Dieser ODER-Schaltung ODR sind weiters zugeführt: Das Signal syg des Schieberegisters NSR sowie das Ausgangssignal erk einer 1010-Erkennung ERK, welche an ihrem Eingang die ersten Abtastwerte der 9-fach Schieberegister des 16 x 9-fach-Schieberegisters SRE erhält.

## Patentansprüche

1. Verfahren zur Rahmen- und Abtastphasensynchronisation in einem Zeitmultiplexsystem mit folgenden Verfahrensschritten:
a) Empfangsseitig wird die Zeitlage einer, in einem Zeitschlitz empfangenen digitalen Zeichenfolge (dif) mittels eines aus einer Anzahl n mit n∈N aufeinander folgenden Zeichen bestehenden Synchronisationswortes festgelegt,
b) ein Fenster vorgegebener Länge um eine Position wird ermittelt, in welcher der Rahmenstruktur des Systems entsprechend das Synchronisationswort zu erwarten ist
c) innerhalb des Fensters wird eine Teilfolge der Zeichenfolge mit einem abgespeicherten Musterwort solange verglichen bis ein Vergleich durch das Feststellen einer Übereinstimmung der Teilfolge mit dem Musterwort unter Berücksichtigung einer vorgegebenen Fehlertoleranz in der Übereinstimmung als positiv bewertet wird,
d) bei positiver Bewertung wird die Position des Synchronisationswortes für die Rahmensynchronisation verwendet und bei negativer Bewertung des Rahmens wird dieser als unsynchronisiert verworfen,
e) die empfangene digitale Zeichenfolge wird mit einem Faktor k mit k∈N überabgetastet,
f) k durch die Überabtastung entstandene, je die Anzahl n Zeichen aufweisende Sub-Teilfolgen werden vorübergehend abgespeichert und aufeinander folgend mit dem Musterwort verglichen,
g) bei jeder positiven oder negativen Bewertung des Vergleiches erfolgt ein positiver respektive negativer Eintrag des entsprechenden Zeitpunktes und
h) aus der Lage zumindest zweier Einträge wird die Abtastphase für die Synchronisation ermittelt.

2. Verfahren nach Anspruch 1,
**dadurch gekennzeichnet, daß** als Abtastphase die Mitte zwischen dem ersten und dem letzten positiven Eintrag gewählt wird.

3. Verfahren nach Anspruch 1,
**dadurch gekennzeichnet, daß** als Abtastphase die Mitte zwischen dem ersten positiven und dem ersten negativen Eintrag gewählt wird.

4. Verfahren nach Anspruch 1,
**dadurch gekennzeichnet, daß** bei mehreren positiven Einträgen die Mitte zwischen aufeinander folgenden positiven Einträgen als Abtastphase gewählt wird.

5. Verfahren nach einem der Ansprüche 1 bis 4,
**dadurch gekennzeichnet, daß** die Daten um die Abtastphase durch ein Unterdrücken kurzer Störungen berichtigt werden.

6. Verfahren nach einem der Ansprüche 1 bis 5,
**dadurch gekennzeichnet, daß** zur Beruhigung der Daten um die Abtastphase mehrere Abtastungen durch Majoritätsbildung ausgewertet werden.

7. Verfahren nach einem der Ansprüche 1 bis 6, bei welchem das Zeitmultiplexsystem ein DECT-System ist.

8. Verfahren nach Anspruch 7,
**dadurch gekennzeichnet, daß** die Überabtastung mit einem Faktor k = 9 erfolgt.

9. Vorrichtung zur Rahmen- und Abtastphasensynchronisation in einer Empfangseinrichtung eines Zeitmultiplexsystems zur Durchführung des Verfahrens nach einem der Ansprüche 1 bis 8 mit folgenden Merkmalen:
a) Eine empfangene und mit dem Empfängertakt synchronisierte Zeichenfolge (daf) ist einer Synchronisationswort-Erkennungseinheit (SWE) zugeführt,
b) die Synchronisationswort-Erkennungseinheit (SWE) weist ein Schieberegister (SRE) und zum Vergleich einer aus einer Anzahl n mit n∈N aufeinander folgenden Zeichen bestehenden Teilfolge der Zeichenfolge mit einem abgespeicherten Musterwort ein Vergleichsregister (VGR) auf,
c) das Schieberegister (SRE) besteht aus einer Anzahl n von k-fachen Sub-Schieberegistern mit k∈N, denen die mit einem Faktor k überabgetastete Zeichenfolge zugeführt ist und
d) einem k-fachen Ereignis-Schieberegister (NSR) zur Aufnahme positiver bzw. negativer Bewertungseinträge ist zur Ermittlung der Abtastphase für den folgenden Zeitschlitz aus der Lage zumindest zweier Einträge des Ereignis-Schieberegisters eine Synchronisationsermittlung (SEM) nachgeordnet.

10. Vorrichtung nach Anspruch 9,
**dadurch gekennzeichnet, daß** die Synchronisationsermittlung (SEM) zur Ermittlung der Mitte zwischen dem ersten und letzten positiven Eintrag eingerichtet ist.

11. Vorrichtung nach Anspruch 9,
**dadurch gekennzeichnet, daß** die Synchronisationsermittlung (SEM) bei mehreren positiven Einträgen zur Ermittlung der Mitte zwischen aufeinander folgenden Einträgen eingerichtet ist.

12. Vorrichtung nach einem der Ansprüche 9 bis 11,
**dadurch gekennzeichnet, daß** sie in einer DECT-Endstelle vorgesehen ist.

13. Vorrichtung nach Anspruch 12, **gekennzeichnet**
**durch** eine 9-fach Überabtastung.

## Claims

1. Method for frame and sampling phase synchronization in a time-division multiplex system with the following method steps:
a) On the receive side the timing of a digital character sequence (dif) received in a time slot is defined by means of a synchronization word consisting of a number n with n∈N consecutive characters,
b) A window of predetermined length around a position is established, in which the frame structure of the system in accordance with the synchronization word is to be expected,
c) Within the window a part sequence of the character sequence is compared with a stored sample word until such time as a comparison is established as positive by determining a match between the part sequence and the sample word, taking into account a predetermined error tolerance,
d) If the evaluation of the frame is positive, the position of the synchronization word is used for the frame synchronization and if the evaluation is negative this frame is discarded as unsynchronised,
e) The received digital character sequence is oversampled by a factor k with k∈N,
f) k sub part sequences occurring as a result of the oversampling, each featuring the number n of characters, are temporarily stored and then consecutively compared with the sample word,
g) For each positive or negative evaluation of the comparison a positive or negative entry of the corresponding time is made respectively and
h) The sampling phase for the synchronization is determined from at least two entries.

2. Method according to claim 1,
**characterised in that** the median between the first and the last positive entry is selected as the sampling phase.

3. Method according to claim 1,
**characterised in that** the median between the first positive and the first negative entry is selected as the sampling phase.

4. Method according to claim 1,
**characterised in that**, with a number of positive entries, the median between successive positive entries is selected as the sampling phase.

5. Method according to one of the claims 1 to 4,
**characterised in that** the data around the sampling phase is corrected by a suppression of brief disturbances.

6. Method according to one of the claims 1 to 5,
**characterised in that**, for calming data around the sampling phase, a number of samplings are evaluated by majority formation.

7. Method according to one of the claims 1 to 6, in which the time division multiplexing system is a DECT system.

8. Method according to claim 7,
**characterised in that** the oversampling is undertaken with a factor k = 9.

9. Device for frame and sampling phase synchronization in a receive device of a time division multiplex system for executing the method according to one of the claims 1 to 8, with following features:
a) A character sequence (daf) received and synchronised with the receive clock is supplied to a synchronization word detection unit (SWE),
b) The synchronization word detection unit (SWE) features a shift register (SRE) and a comparison register (VGR), for comparing a part sequence of the character sequence consisting of a number n with n∈N consecutive characters with a stored sample word,
c) The shift register (SRE) consists of a number n of k-fold sub-shift registers with k∈N, to which the character sequence oversampled with the factor k is fed and
d) A k-fold event shift register (NSR) for accommodating positive or negative evaluation entries is followed by a synchronization determination facility (SEM) for determining the sampling phase for the following time slot from the position of at least two entries of the event shift register.

10. Device according to claim 9,
**characterised in that** the synchronization determination facility (SEM) is configured for determining the median between the first and last positive entry.

11. Device according to claim 9,
**characterised in that** the synchronization determination facility (SEM) is configured for a number of positive entries to determine the median between consecutive entries.

12. Device according to one of the claims 9 to 11,
**characterised in that** it is provided in a DECT terminal.

13. Device according to claim 12, **characterised by** a 9-fold oversampling.

## Revendications

1. Procédé de synchronisation de trames et de phases d'échantillonnage dans un système à multiplexage temporel, comprenant les étapes suivantes:
a) côté récepteur, la position temporelle d'une suite numérique de signes (dif) reçue dans un créneau temporel est définie au moyen d'un mot de synchronisation composé d'un nombre n avec n∈N signes successifs,
b) une fenêtre de longueur prédéfinie autour d'une position est déterminée, dans laquelle il faut s'attendre au mot de synchronisation, conformément à la structure de trames du système,
c) dans la fenêtre, une suite partielle de la suite de signes est comparée avec un mot d'échantillon stocké jusqu'à ce qu'une comparaison soit évaluée comme étant positive par la constatation d'une coïncidence entre la suite partielle et le mot d'échantillon compte tenu d'une tolérance d'erreurs prédéterminée dans la coïncidence,
d) étant donné une évaluation positive, la position du mot de synchronisation est utilisée pour la synchronisation de trames et, étant donné une évaluation négative de la trame, celle-ci est rejetée comme non synchronisée,
e) la suite numérique de signes reçue est suréchantillonnée avec un facteur k avec k∈N,
f) k sous-suites partielles résultant du suréchantillonnage et comportant chacune le nombre n de signes sont mises en mémoire temporairement et comparées successivement au mot d'échantillon,
g) à chaque évaluation positive ou négative de la comparaison a lieu une entrée positive respectivement négative de l'instant correspondant et
h) la phase d'échantillonnage pour la synchronisation est déterminée à partir de la position d'au moins deux entrées.

2. Procédé selon la revendication 1, **caractérisé en ce qu'**est choisie en tant que phase d'échantillonnage la médiane entre la première et la dernière entrée positive.

3. Procédé selon la revendication 1, **caractérisé en ce qu'**est choisie en tant que phase d'échantillonnage la médiane entre la première entrée positive et la première entrée négative.

4. Procédé selon la revendication 1, **caractérisé en ce que**, étant donné plusieurs entrées positives, la médiane entre des entrées positives successives est choisie en tant que phase d'échantillonnage.

5. Procédé selon l'une des revendications 1 à 4, **caractérisé en ce que** les données autour de la phase d'échantillonnage sont corrigées par une suppression de perturbations courtes.

6. Procédé selon l'une des revendications 1 à 5, **caractérisé en ce que**, pour ramener les données au repos autour de la phase d'échantillonnage, plusieurs échantillonnages sont évalués par formation de majorité.

7. Procédé selon l'une des revendications 1 à 6, dans lequel le système à multiplexage temporel est un système DECT.

8. Procédé selon la revendication 7, **caractérisé en ce que** le suréchantillonnage se fait avec un facteur k = 9.

9. Dispositif de synchronisation de trames et de phases d'échantillonnage dans un dispositif récepteur d'un système à multiplexage temporel pour exécuter le procédé selon l'une des revendications 1 à 8, avec les caractéristiques suivantes:
a) une suite de signes reçue et synchronisée avec l'horloge du récepteur (daf) est amenée à une unité de reconnaissance de mots de synchronisation (SWE),
b) l'unité de reconnaissance de mots de synchronisation (SWE) comporte un registre à décalage (SRE) et un registre comparateur (VGR) pour comparer une suite partielle de la suite de signes avec un mot d'échantillonnage stocké, laquelle suite partielle est composée d'un nombre n, avec n∈N, de signes successifs,
c) le registre à décalage (SRE) se compose d'un nombre n de sous-registres à décalage k fois, avec k∈N, auxquels est amenée la suite de signes suréchantillonnée avec un facteur k, et
d) une détermination de synchronisation (SEM) est située en aval d'un registre d'événements à décalage k fois (NSR), destiné à recevoir des entrées d'évaluation positives resp. négatives, pour déterminer la phase d'échantillonnage pour le créneau temporel suivant à partir de la position d'au moins deux entrées du registre d'événements à décalage.

10. Dispositif selon la revendication 9, **caractérisé en ce que** la détermination de synchronisation (SEM) est aménagée aux fins de la détermination de la médiane entre la première et la dernière entrée positive.

11. Dispositif selon la revendication 9, **caractérisé en ce que** la détermination de synchronisation (SEM) est, dans le cas de plusieurs entrées positives, aménagée aux fins de la détermination de la médiane entre des entrées successives.

12. Dispositif selon l'une des revendications 9 à 11,
**caractérisé en ce qu'**il est prévu dans une station terminale DECT.

13. Dispositif selon la revendication 12, **caractérisé par** un suréchantillonnage 9 fois.
